# EUROPÄISCHE PATENTSCHRIFT

(11) **EP 2 705 946 B1**
(45) Veröffentlichungstag und Bekanntmachung des Hinweises auf die Patenterteilung: **29.11.2017**
(21) Anmeldenummer: 13179197.2
(22) Anmeldetag: 05.08.2013
(51) Int. Cl.: B29D 30/66, B60C 11/16

(54) **Verfahren zum dauerhaften Einbinden eines in eine Aussparung eines Laufstreifens eines Fahrzeugluftreifens eingesetzten Profileinsatzes**
Method for permanent insertion of a profile insert inserted into a recess in the tread of a pneumatic tyre for a vehicle
Procédé pour intégrer durablement un insert profilé inséré dans un évidement d'une bande de roulement d'un pneu de véhicule

(30) Priorität: 06.09.2012 DE 102012108270
(43) Veröffentlichungstag der Anmeldung: 12.03.2014
(73) Patentinhaber: Continental Reifen Deutschland GmbH, 30165 Hannover (DE)
(72) Erfinder: Kendziorra, Norbert, 30827 Garbsen (DE); Schlittenhard, Jan, 30900 Wedemark (DE); Kötter, Maik, 49733 Haren (Ems) (DE); Seng, Matthias, 30449 Hannover (DE); Brandau, Christian, 30419 Hannover (DE)
(74) Vertreter: Finger, Karsten

(56) Entgegenhaltungen:
- DE-A1- 4 307 221
- DE-A1-102009 044 845
- JP-A- S5 851 134

## Beschreibung

Die Erfindung betrifft ein Verfahren zum dauerhaften Einbinden eines in eine bei der Vulkanisation des Reifens eingeformte Aussparung im Laufstreifen eines fertig vulkanisierten Fahrzeugluftreifens eingesetzten Profileinsatzes, wobei der Profileinsatz aus einem Gummimaterial besteht, welches sich hinsichtlich zumindest einer Eigenschaft, beispielsweise der Steifigkeit, vom umgebenden Gummimaterial des Laufstreifens unterscheidet.

Aus der JP 58-051134 A ist es bekannt, im Laufstreifen eines Fahrzeugluftreifens während der Vulkanisation des Reifens in der Reifenheizform Aussparungen auszubilden, in welche bei fertigem Reifen Profileinsätze, in die jeweils ein Spike eingebettet ist, eingesetzt wird. Das Gummimaterial des Profileinsatzes wird mit dem Laufstreifengummi durch einen Gummikleber verbunden. Aus der WO 2010/106114 ist es bekannt, im Laufstreifen eines Reifens flache Aussparungen vorzusehen, in welche bei fertigem Reifen dünne Einsätze eingeklebt werden. Die Einsätze können aus unterschiedlichen Materialien bestehen, beispielsweise Silikon, Gummi, textilen Materialien, Metallen, Leder und dergleichen. Als Kleber sind unter anderem Cyanacrylat, Silikonkleber, Polyurethankleber, Urethankleber und dergleichen erwähnt. Aus der WO 2010/106112 A1 ist es bekannt, dekorativ ausgeführte Einsätze in Aussparungen im Laufstreifen mittels derartiger Kleber einzufügen. Die bekannten Kleber gaben sich als wenig haltbar herausgestellt, insbesondere unter den unterschiedlichen Witterungsbedingten, denen ein Reifen beim Betrieb ausgesetzt ist.

Aus der DE 10 2009 044 845 A1 sind ein Verfahren und eine Vorrichtung zum Aktivieren eines Gummi-Metall-Haftsystems von Spikes bekannt, wobei die mit dem Gummi-Metall-Haftsystem beschichteten Spikes in den Laufstreifen eines fertig vulkanisierten Fahrzeugluftreifens eingebracht worden sind. Die Vorrichtung weist eine Heizstation mit einer verschließbaren Einlassöffnung und einer verschließbaren Auslassöffnung auf. Über eine Transporteinrichtung werden die mit Spikes bestückten Reifen in die Heizstation transportiert. Durch ein Einbringen von Sattdampf in die Vorrichtung wird das Haftsystem aktiviert, ohne das der Reifen thermisch überlastet wird. Das verwendete Haftsystem kann dabei einer der Primer Parlock®, Chemlock® oder Chemosil® sein.

Die DE 43 07 221 A1 betrifft p-Dinitroso-Benzol, welches auf einem Träger niedergeschlagen wird, insbesondere aus einer Lösung durch Sublimation, wobei als Träger Kieselsäure, Zeolithe, Ruße oder Schichtsilikate in Frage kommen. Erwähnt ist ferner die bekannte Verwendung von p-Dinitroso-Benzol als Vernetzungsmittel oder Vulkanisiermittel bei Gummimischungen.

Der Erfindung liegt die Aufgabe zugrunde eine Möglichkeit zur Verfügung zu stellen, mit welcher Profileinsätze dauerhaltbar - über die gesamte Lebensdauer des Reifens und bei allen Witterungseinflüssen - in Aussparungen des fertig vulkanisierten Reifens eingebracht und mit diesem verbunden werden können.

Gelöst wird die gestellte Aufgabe erfindungsgemäß dadurch, dass ein reaktives Haftsystem, welches zumindest einen Bestandteil aufweist, der unter äußerer Wärmeeinwirkung sublimiert, in die Grenzschichten von Gummimaterialien eindringt und dort vernetzt, entweder an der Innenwand der Aussparung und/oder an der Außenseite des Profileinsatzes aufgebracht wird,
anschließend der Profileinsatz in die Aussparung eingedrückt wird
und der Laufstreifen zumindest im Bereich bzw. um den Bereich des Profileinsatzes erwärmt wird, um die Sublimation und Wanderung des Bestandteils des reaktiven Haftsystems zu bewirken.

Üblicherweise werden reaktive Haftsysteme zur Gummi-Metall-Haftung eingesetzt. Im Rahmen der Erfindung wurde nun erkannt, dass sich reaktive Haftsysteme auch sehr gut dafür eignen, eine dauerhaltbare Verbindung zwischen den unterschiedlichen Gummimaterialien eines Profileinsatzes und des Laufstreifens herzustellen.

Es ist eine sehr dünne Schicht an reaktivem Haftsystem ausreichend, um eine dauerhafte Einbindung des Profileinsatzes im Laufstreifengummi zu erzielen. Das reaktive Haftsystem wird demnach in einer Schichtdicke von 2 µm bis 60 µm entweder an der Innenwand der Aussparung und/oder an der Außenseite des Profileinsatzes aufgebracht. Anschließend wir der Profileinsatz in die Aussparung eingedrückt und der Laufstreifen zumindest im Bereich bzw. um den Bereich des Profileinsatzes erwärmt, um die Sublimation und Wanderung des Vernetzungshilfsmittels des reaktiven Haftsystems zu bewirken.

Als reaktives Haftsystem kann eines der am Markt erhältlichen einschlägigen Produkte verwendet werden, insbesondere Parlock®, Chemlock® oder Chemosil®.

Die Profileinsätze können unterschiedliche Gestalt und unterschiedliche Größen aufweisen, je nach Einsatzzweck bzw. Verwendungszweck. Es kann daher in einem Profilelement des Laufstreifens, insbesondere in einem Profilblock, mehr als ein Profileinsatz eingebunden werden. Die Profileinsätze selbst können aus unterschiedlichen Gummimaterialien, insbesondere aus mehreren Schichten unterschiedlicher Gummimaterialen, in beliebiger, insbesondere axialer Schichtung, bestehen. Es gibt daher eine Vielzahl von Möglichkeiten, den Profileinsatz bzw. die Profileinsätze an den jeweiligen Einsatzzweck entsprechend anzupassen.

Gemäß einer bevorzugten Ausführungsform der Erfindung werden Profileinsätze dafür verwendet, Spikes im Laufstreifen zu verankert. In diesem Fall ist im betreffenden Profileinsatz ein Spike, insbesondere ebenfalls mittels eines reaktiven Haftsystems, eingebunden bzw. verankert.

Bei in Profileinsätzen eingebundenen Spikes ist die oben erwähnte Maßnahme, den jeweiligen Profileinsatz aus Schichten aus unterschiedlichen Gummimaterialien herzustellen, besonders vorteilhaft. So kann der zur Verankerung eines Spikes vorgesehene Profileinsatz zwei oder auch mehr Schichten aus unterschiedlichen Gummimaterialien aufweisen, sodass der Spike zumindest mit seinem äußeren Abschnitt in eienm Gummimaterial oder einer Schicht aus einem Gummimaterial eingesetzt wird, dessen Steifigkeit sich mit der Umgebungs- bzw. Außentemperatur ändert. Besonders vorteilhaft ist es, wenn dieses Gummimaterial bei niedriger Temperatur steifer ist als bei höherer Temperatur, wobei unter "höherer Temperatur" eine Temperatur über 0° Celsius zu verstehen ist. Damit kann bei Temperaturen unter 0° Celsius ein guter Eisgriff gewährleistet werden und bei höherer Temperatur können Beschädigungen der Straßenoberfläche gering gehalten werden.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 eine Ansicht eines erfindungsgemäß ausgeführten Profilblockes,
Fig. 2 einen Schnitt durch einen Profilblock mit einer Ausführungsform der Erfindung und
Fig. 3 eine Ansicht eines Profilblockes eines Laufstreifens mit einer weiteren Ausführungsvariante der Erfindung.

Die Erfindung befasst sich mit dem Einbinden von Profileinsätzen in Laufstreifen von Fahrzeugluftreifen beliebiger Bauart. Die Profileinsätze bestehen wie der Laufstreifen selbst aus vulkanisiertem Gummi, unterscheiden sich jedoch vom Gummimaterial des Laufstreifens in der Gummizusammensetzung und daher zumindest einer Eigenschaft. Beispielsweise weisen die Profileinsätze eine andere Steifigkeit und/oder andere Dämpfungseigenschaften auf als das Gummimaterial des Laufstreifens. Profileinsätze können verschiedenen Zwecken dienen, beispielsweise können sie derart ausgeführt sein, dass der Laufstreifen des Reifens an bestimmte Fahr- bzw. Witterungsbedingungen, beispielsweise extreme Kälte oder Hitze, besser angepasst wird.

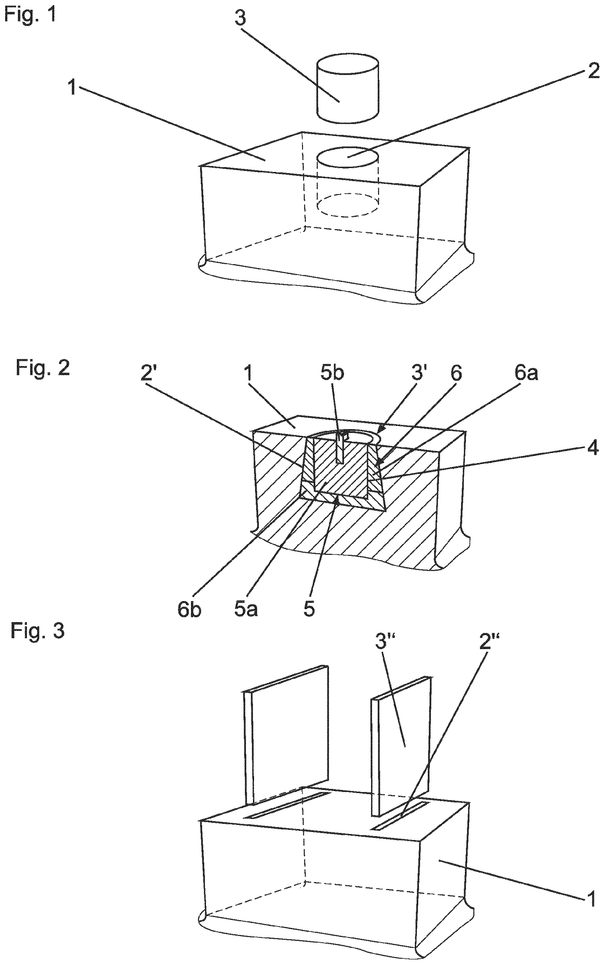

Fig. 1 zeigt eine grundsätzliche Ausführungsform der Erfindung anhand eines Profilblockes 1, welcher bei der Herstellung des Reifens mit einer hier beispielsweise zylindrischen Aussparung 2 zur Aufnahme eines entsprechend zylindrischen Profileinsatzes 3 versehen worden. Die Aussparungen 2 werden über die den Laufstreifen formenden Teile der Vulkanisationsform, die mit den "Negativen" der Aussparungen 2, entsprechenden vorspringenden Elementen, versehen sind, während des Heizvorganges eingeformt. Wie Fig. 1 zeigt, kann die Aussparung 2 tief in den Profilblock 1 hineinreichen, insbesondere bis auf die maximale Profiltiefe, welche der größten Tiefe der zwischen den einzelnen Profilelementen bzw. Profilblöcken verlaufenden Nuten entspricht. Ist der Reifen fertig vulkanisiert, werden die Profileinsätze 3 in die Aussparungen 2 eingesetzt und mit den Profilblöcken 1 fest verbunden. Gemäß der Erfindung erfolgt die Verbindung mittels eines reaktiven Haftsystems, welches vor dem Einsetzen des Profileinsatzes 3 an dessen mit den Wänden der Aussparung 2 in Kontakt kommenden Außenseiten oder an den Innenwänden der Aussparung 2 aufgebracht wird. Die Dicke der aufgebrachten Haftsystemschicht beträgt zwischen 2 µm und 60 µm. Reaktive Haftsysteme sind solche, die zumindest einen Bestandteil, ein Vernetzungshilfsmittel, beinhalten, welches bei Erwärmung sublimiert, an den Kontaktflächen sowohl in das Gummimaterial des Profileinsatzes 3 als auch in das Gummimaterial des Profilblockes 1 im µm-Bereich eindringt bzw. einwandert und sich hier mit den Gummimaterialien vernetzt. Auf diese Weise wird eine sehr feste Haftverbindung der Profileinsätze 3 mit den Profilblöcken 1 erzielt.

Derartige reaktive Haftsysteme sind als Gummi-Metall-Haftsysteme am Markt erhältlich, beispielsweise unter den Bezeichnungen Parlock®, Chemlock® oder Chemosil®. Sie enthalten an sich bekannte Vernetzungshilfsmittel, wie beispielweise p-Dinitroso-Benzol.

Fig. 2 zeigt einen Profilblock 1 im Schnitt mit einer kegelstumpfförmigen Aussparung 2', wobei sich der größere Durchmesser des Kegelstumpfes im Blockinneren befindet. In die Aussparung 2' wird ein entsprechend kegelstumpfförmig ausgeführter Profileinsatz 3' eingebracht. Der Profileinsatz 3' besteht bei dieser Ausführungsform aus einem Gummi-Grundkörper 6, welcher mittig mit einer beispielhaft zylindrischen Aussparung 4 zum Einsetzen eines Spikes 5 versehen ist. Der Einfachheit halber ist hier ein Spike 5 mit einem zylindrischen metallischen Spikekörper 5a und einem in diesem verankerten metallischen Spikepin 5b dargestellt. Der Spikekörper 5a kann eine abweichende Form, insbesondere eine der für Spikekörper üblichen Formen, aufweisen, wobei die Aussparung 4 im Profileinsatz 3' der Form des Spikekörpers 5a entsprechend angepasst ausgeführt wird. Der Spike 5 wird mit einem durch Wärmebehandlung aktivierbaren reaktiven Haftsystem, wie oben beschrieben, in der Aussparung 4 des Grundkörpers 6 eingebunden. Der mit dem Spike 5 verbundene Profileinsatz 3' wird mittels eines reaktiven Haftsystems auf die oben beschriebene Weise mit dem Profilblock 1 verbunden.

Wie Fig. 2 zeigt kann der Grundkörper 6 aus zwei Gummi-Schichten 6a und 6b, einer inneren Schicht 6a und einer äußeren Schicht 6b, aus unterschiedlichen Gummimischungen bestehen. Jede Schicht 6a, 6b verläuft etwa über die Hälfte der radialen Erstreckung des Grundkörpers 6, es kann jedoch eine der Schichten 6a, 6b auch dünner als die andere ausgeführt sein. Die Gummimaterialien der Schichten 6a, 6b können unterschiedliche Steifigkeiten aufweisen. Bevorzugt ist eine Ausführung, bei der die äußere Schicht 6a aus einem Gummimaterial besteht, welches bei Kälte steifer ist als bei Wärme. Auf diese Weise kann der Spike 5 in eine Schicht 5a eingebettet sein deren Steifigkeit von der Außentemperatur - durch die Auswahl der Glastemperatur des Polymers bzw. der Polymere in der Mischung - abhängt, insbesondere, um den Spike 5 bei niedrigen Temperaturen steif und bei höheren Temperaturen über 0° C weicher einzubetten. Damit kann einerseits bei niedrigen Temperaturen ein guter Eisgriff gewährleistet werden und es können bei höheren Temperaturen Beschädigungen der Straßenoberfläche geringer gehalten werden.

Die Profileinsätze können nahezu jede beliebige äußere Form aufweisen, sofern sich die entsprechenden Aussparungen im Laufstreifen einformen und sich die Profileinsätze bei vulkanisiertem Reifen einsetzen lassen.

Fig. 3 zeigt eine weitere Ausführungsvariante, bei der in einen Profilblock 1 zwei Profileinsätze 3" eingesetzt werden. Diese sind beispielhaft plättchenförmig ausgeführt und werden parallel zueinander und unter einem gegenseitigen Abstand in den Profilblock 1, in welchem entsprechende Schlitze als Aussparungen 2' über die Heizform eingeformt worden sind, eingesetzt und mittels eines reaktiven Haftsystems, wie beschrieben, eingebunden.

Grundsätzlich bestehen die Profileinsätze aus einem Gummimaterial, welches andere Eigenschaften als das umgebende Gummimaterial des Laufstreifens aufweist. Die Profileinsätze können insbesondere eine andere Steifigkeit, vorzugsweise eine höhere Steifigkeit, aufweisen als der Laufstreifen, etwa um den Laufstreifen in bestimmten Bereichen zu versteifen. Die Profileinsätze können ferner besonders strukturierte äußere Oberflächen, insbesondere Kennzeichnungen, oder auch eine besondere Farbe, aufweisen.

### Bezugsziffernliste

- 1: Profilblock
- 2: Aussparung
- 2': Aussparung
- 2": Aussparung
- 3: Profileinsatz
- 3': Profileinsatz
- 3": Profileinsatz
- 4: Aussparung
- 5: Spike
- 5a: Spikekörper
- 5b: Spikepin
- 6: Grundkörper
- 6a: Schicht
- 6b: Schicht

## Patentansprüche

1. Verfahren zum dauerhaften Einbinden eines in eine bei der Vulkanisation des Reifens eingeformten Aussparung (2, 2', 2") im Laufstreifen eines fertig vulkanisierten Fahrzeugluftreifens eingesetzten Profileinsatzes (3, 3', 3 "), wobei der Profileinsatz (3, 3', 3") aus einem Gummimaterial besteht, welches sich hinsichtlich zumindest einer Eigenschaft, beispielsweise der Steifigkeit, vom umgebenden Gummimaterial des Laufstreifens unterscheidet,
**dadurch gekennzeichnet,**
**dass** ein reaktives Haftsystem, welches zumindest einen Bestandteil aufweist, der unter äußerer Wärmeeinwirkung sublimiert, in die Grenzschichten von Gummimaterialien eindringt und dort vernetzt, entweder an der Innenwand der Aussparung (2, 2', 2") und/oder an der Außenseite des Profileinsatzes (3, 3', 3") aufgebracht wird,
anschließend der Profileinsatz (3, 3', 3") in die Aussparung (2, 2', 2") eingedrückt wird
und der Laufstreifen zumindest im Bereich bzw. um den Bereich des Profileinsatzes (3, 3', 3") erwärmt wird, um die Sublimation und Wanderung des Bestandteils des reaktiven Haftsystems zu bewirken.

2. Verfahren nach Anspruch 1, **dadurch gekennzeichnet, dass** das reaktive Haftsystem in einer Schichtdicke von 2 µm bis 60 µm an der Innenwand der Aussparung (2, 2', 2") und/oder der Außenseite des Profileinsatzes (3, 3', 3") aufgebracht wird.

3. Verfahren nach Anspruch 1 oder 2, **dadurch gekennzeichnet, dass** als reaktives Haftsystem Parlock®, Chemlock® oder Chemosil® verwendet wird.

4. Verfahren nach einem der Ansprüche 1 bis 3, **dadurch gekennzeichnet, dass** in einem Profilelement, insbesondere einem Profilblock (1), mehr als ein Profileinsatz (3 ") eingebunden sind.

5. Verfahren nach einem der Ansprüche 1 bis 4, **dadurch gekennzeichnet, dass** der Profileinsatz (3') aus zumindest zwei unterschiedlichen Gummimaterialien, insbesondere axial geschichtet, besteht.

6. Verfahren nach einem der Ansprüche 1 bis 5, **dadurch gekennzeichnet, dass** im Profileinsatz (3') ein Spike (5), insbesondere ebenfalls mittels eines reaktiven Haftsystems, eingebunden wird.

7. Verfahren nach einem der Ansprüche 1 bis 6, **dadurch gekennzeichnet, dass** der Spike (5) zumindest mit seinem äußeren Abschnitt in ein Gummimaterial oder eine Schicht (5a) aus einem Gummimaterial eingesetzt wird, dessen Steifigkeit sich mit der Umgebungs- bzw. Außentemperatur ändert.

8. Verfahren nach Anspruch 7, **dadurch gekennzeichnet, dass** das Gummimaterial bei niedriger Temperatur steifer ist als bei höherer Temperatur.

9. Fahrzeugluftreifen mit einem Laufstreifen aus Gummi, welcher zumindest einen in eine bei der Vulkanisation des Reifens eingeformten Aussparung (2, 2', 2") eingebundenen Profileinsatz (3, 3', 3") aus einem Gummimaterial aufweist, welches sich hinsichtlich zumindest einer Eigenschaft, beispielsweise der Steifigkeit, vom umgebenden Gummimaterial des Laufstreifens unterscheidet, **dadurch gekennzeichnet,**
**dass** im fertig vulkanisierten Reifen der Laufstreifengummi mit dem Gummimaterial des Profileinsatzes (3, 3', 3") mittels eines reaktiven Haftsystems, welches zumindest einen Bestandteil aufweist, der unter äußerer Wärmeeinwirkung sublimiert, in die Grenzschichten der Gummimaterialien eindringt und dort vernetzt, verbunden worden ist.

## Claims

1. Method for the permanent insertion of a profile insert (3, 3', 3") inserted into a recess (2, 2', 2") in the tread of a completely vulcanized pneumatic vehicle tyre that is formed during the vulcanization of the tyre, the profile insert (3, 3', 3") consisting of a rubber material which differs from the surrounding rubber material of the tread with respect to at least one property, for example the stiffness,
**characterized**
**in that** a reactive adhesive system which has at least one component that sublimes under the external effect of heat, penetrates into the boundary layers of rubber materials and crosslinks there is applied either to the inner wall of the recess (2, 2', 2") and/or to the outer side of the profile insert (3, 3', 3"),
subsequently the profile insert (3, 3', 3") is pressed into the recess (2, 2', 2")
and the tread is heated at least in the region or around the region of the profile insert (3, 3', 3") in order to bring about the sublimation and migration of the component of the reactive adhesive system.

2. Method according to Claim 1, **characterized in that** the reactive adhesive system is applied to the inner wall of the recess (2, 2', 2") and/or the outer side of the profile insert (3, 3', 3") in a layer thickness of 2 *µ*m to 60 *µ*m.

3. Method according to Claim 1 or 2, **characterized in that** Parlock®, Chemlock® or Chemosil® is used as the reactive adhesive system.

4. Method according to one of Claims 1 to 3, **characterized in that** more than one profile insert (3") is inserted in a profile element, in particular a profile block (1).

5. Method according to one of Claims 1 to 4, **characterized in that** the profile insert (3') consists of at least two different rubber materials, in particular axially layered.

6. Method according to one of Claims 1 to 5, **characterized in that** a spike (5) is inserted in the profile insert (3'), in particular likewise by means of a reactive adhesive system.

7. Method according to one of Claims 1 to 6, **characterized in that** the spike (5) is inserted at least with its outer portion into a rubber material or a layer (5a) of a rubber material of which the stiffness changes with the ambient or outside temperature.

8. Method according to Claim 7, **characterized in that** the rubber material is stiffer at lower temperature than at higher temperature.

9. Pneumatic vehicle tyre with a rubber tread which has at least one profile insert (3, 3', 3") inserted into a recess (2, 2', 2") that is formed during the vulcanization of the tyre and is of a rubber material which differs from the surrounding rubber material of the tread with respect to at least one property, for example the stiffness, **characterized**
**in that**, in the completely vulcanized tyre, the tread rubber has been bonded with the rubber material of the profile insert (3, 3', 3") by means of a reactive adhesive system which has at least one component that sublimes under the external effect of heat, penetrates into the boundary layers of the rubber materials and crosslinks there.

## Revendications

1. Procédé pour incorporer de manière permanente dans la bande de roulement d'un bandage pneumatique vulcanisé pour véhicule une garniture profilée (3, 3', 3") insérée dans une découpe (2, 2', 2") formée lors de la vulcanisation du bandage de roue, la garniture profilée (3, 3', 3") étant constituée d'un matériau de caoutchouc qui se distingue du matériau de caoutchouc environnant de la bande de roulement par au moins une propriété, par exemple la rigidité,
**caractérisé en ce que**
un système adhésif réactif qui présente au moins un composant qui sous l'effet d'une chaleur extérieure, se sublime, pénètre dans les couches frontières des matériaux de caoutchouc et s'y réticule est appliqué soit sur la paroi intérieure de la découpe (2, 2', 2") et/ou sur le côté extérieur de la garniture profilée (3, 3', 3"), la garniture profilée (3, 3', 3") étant ensuite enfoncée dans la découpe (2, 2', 2") et
**en ce qu'**au moins dans la zone occupée par la garniture profilée (3, 3', 3") ou autour de cette partie, la bande de roulement est chauffée pour entraîner la sublimation et la migration du composant du système adhésif réactif.

2. Procédé selon la revendication 1, **caractérisé en ce que** le système adhésif réactif est appliqué sur la paroi intérieure de la découpe (2, 2', 2") et/ou sur le côté extérieur de la garniture profilée (3, 3', 3") en couches d'une épaisseur de 2 *µ*m à 60 *µ*m.

3. Procédé selon les revendications 1 ou 2, **caractérisé en ce que** le système adhésif réactif utilisé est le Parlock®, le Chemlock® ou le Chemosil®.

4. Procédé selon l'une des revendications 1 à 3, **caractérisé en ce que** plus d'une garniture profilée (3") est incorporée dans un élément profilé et en particulier dans un bloc profilé (1).

5. Procédé selon l'une des revendications 1 à 4, **caractérisé en ce que** la garniture profilée (3') est formée d'au moins deux matériaux de caoutchouc différents, en particulier en stratification axiale.

6. Procédé selon l'une des revendications 1 à 5, **caractérisé en ce qu'**une pointe (5) est incorporée dans la garniture profilée (3'), notamment également au moyen d'un système adhésif réactif.

7. Procédé selon l'une des revendications 1 à 6, **caractérisé en ce que** la pointe (5) est insérée au moins par sa section extérieure dans un matériau de caoutchouc ou dans une couche (5a) en matériau de caoutchouc dont la rigidité varie avec la température ambiante ou la température extérieure.

8. Procédé selon la revendication 7, **caractérisé en ce que** le matériau de caoutchouc est plus rigide à basse température qu'à haute température.

9. Bandage pneumatique pour roue de véhicule présentant une bande de roulement en caoutchouc qui présente une garniture profilée (3, 3', 3") insérée dans une découpe (2, 2', 2") formée lors de la vulcanisation du bandage de roue, la garniture profilée étant constituée d'un matériau de caoutchouc qui se distingue du matériau de caoutchouc environnant de la bande de roulement par au moins une propriété, par exemple la rigidité,
**caractérisé en ce que**
dans le bandage de roue vulcanisé, le caoutchouc de la bande de roulement a été relié avec le matériau de caoutchouc de la garniture profilée (3, 3', 3") au moyen d'un système adhésif réactif qui présente au moins un composant qui sous l'action d'une chaleur extérieure, se sublime, pénètre dans les couches frontières des matériaux de caoutchouc et s'y réticule.
